# EUROPEAN PATENT APPLICATION

(11) **EP 0 713 971 A1**
(43) Date of publication of application: **29.05.1996**
(21) Application number: 95630124.6
(22) Date of filing: 23.11.1995
(51) Int. Cl.: F03D 3/06

(54) **Vertical axis windmill with flat blades**

(30) Priority: 26.11.1994 KR 9431375
(71) Applicant: Chung, Jung-Han, Seoul 157-030 (KR)
(72) Inventor: Chung, Jung-Han, Seoul 157-030 (KR)
(74) Representative: Schmitz, Jean-Marie

(57) **Abstract**

The present invention relates to a wing plate apparatus of the windmill used for an electric power generator. One object of the invention is to provide a wing plate apparatus of the windmill which does not droop downward notwithstanding its own weight in a type that the wing plate is pivotally secured on the end of the horizontal frame. The other is to provide a wing plate apparatus which can operate even in a breeze.

To accomplish the object of the invention in a type of wing plate apparatus of windmill which comprises a support, a rotation axis that is secured in the support and vertically rotates, plural frames that horizontally radiate from the upper portion of the axis and plural wing plates (30) each of which is pivotally secured at the free end of each frame, the wing plate apparatus according to the invention is characterized in that the wing plate has oblong holes (34) horizontally punctured therein and the wing plate apparatus further comprises elongated rod type stoppers (44) to limit the unfolding angle of the wing plate, wherein one end of the stoppers being pivotally secured on the frame and the other end passing through the oblong holes so as to make the wing plate unfolded up to 120°.

## Description

### BACK GROUND OF THE INVENTION

The present invention relates to a wing plate of the windmill used for an electric power generator which operates on a vertical rotational axis, particularly to an improvement of the wing plate disclosed in Korean Utility Model application no. 91-14763 which was also invented by this inventor.

The wing plate, which was invented by this inventor and disclosed in Korean Utility Model application no. 91-14763, is so structured as to be pivotally secured at the end of a frame which extends radiately from the vertical rotation axis secured on a support. In this prior art, the unfolding angle of the wing plate is limited up to 60° ∼ 90° by means of rings secured between the end of the frame and the wing plate and a spring inserted in the rings in order to prevent the top portion of the rotation axis from unstable shaking and its consequent speed reduction when the wing plate is unfolded by centrifugal force at the position where unfolding angle of the wing plate is 180° ∼ 200° .

However said type of windmill has some drawbacks; one is that the wing plate secured at the tip of a horizontal support develops a tendency to droop downward due to its own weight and another is that the wing plate has no structure to catch sufficient wind and, thus, does not work in a gentle wind.

Accordingly, what is needed is to provide a wing plate apparatus of the windmill which does not droop downward notwithstanding its own weight and also can operate even in a breeze.

### SUMMARY OF THE INVENTION

Consequently, in the windmill that comprises a support, a rotation axis which is secured in said support and vertically rotates, plural frames which horizontally radiate from the upper portion of said axis and plural wing plates each of which is pivotally secured at the free end of said each frame, one of the above needs can be satisfied by the wing plate apparatus which is characterized in that the wing plate has oblong holes horizontally punctured therein and the wing plate apparatus further comprises elongated rod type stoppers to limit the unfolding angle of the wing plate, one end of the stoppers being pivotally secured on said frame and the other end passing through said oblong holes so as to make the wing plate unfolded up to 120° .

As a result of the above stated structure of the wing plate apparatus of the windmill according to the invention, said wing plate apparatus enables the wing plate to catch sufficient wind with the help of pivoting structure when it rotates by the wind, and the angle between the wing plate and the frame i.e. wing plate's unfolding angle in regard to the frame is limited up to 120 ° due to the stoppers whose one end is pivotally secured on the frame and the other end passes through the oblong holes.

Further, the support can be free from unstable shaking by making the wing plate round and it rotates and catches the wind uniformly.

Furthermore, an upright peripheral wall protrusively formed on the circumference of said circular wing plate can make the plate rotate even in a gentle wind.

### BRIEF DESCRIPTION OF THE DRAWINGS

These and other features, aspects and advantages of the present invention will become better understood with reference to the following description, appended claims, and accompanying drawings.

**Fig. 1** is a whole perspective view of the apparatus according to the invention.

**Fig. 2** is a top plan view of one of the wing plates which shows its unfolding status during rotation.

**Fig. 3** is a front view of one of the wing plates which shows its pivotal structure in regard to the frame.

### DETAILED DESCRIPTION OF A PREFERRED EMBODIMENT

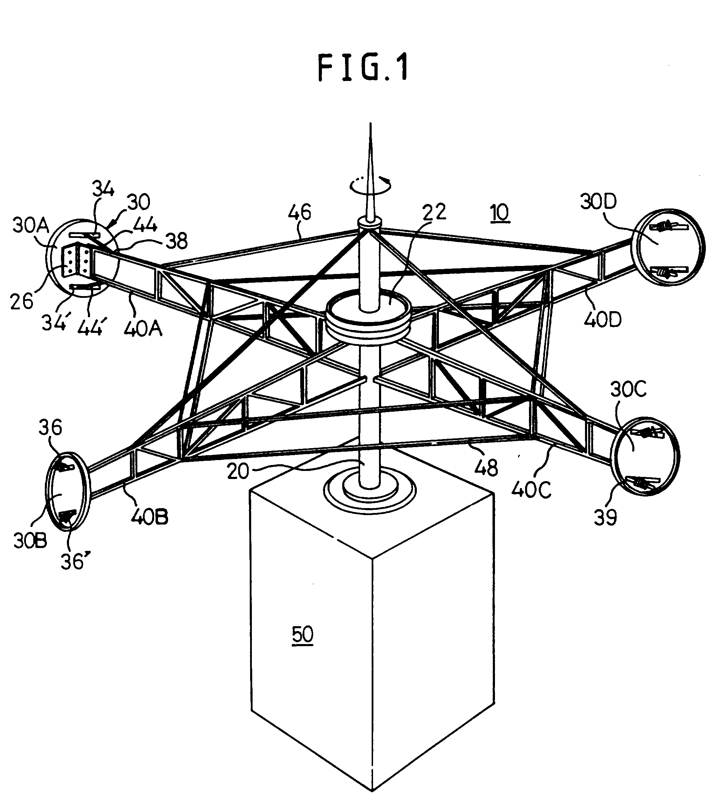

Referring to **Fig. 1**, a circular wing plate apparatus **10** of windmill is fixed on the upper portion of a rotation axis **20** which is secured on a support **50** and vertically rotates. In order to make said axis **20** rotate according to the rotation of the wing plate apparatus **10**, said wing plate apparatus comprises a frame connector **22** fixed on said rotation axis **20**, plural of frames **40A**, **40B, 40C** and **40D** which horizontally radiate from said frame connector **22** and plural wing plates **30A**, **30B**, **30C** and **30D** each of which is pivotally secured on each end of said frames **40A, 40B, 40C and 40D**. The structure of wing plates connected to the frames is identical. To show an example of one of the wing plates, the rear side of which is connected to the frame in the drawing, said wing plate **30A** is pivotally connected to the end of frame **40A** by a hinge **26** with ratio of eccentricity of 3:1 or 4:1 in horizontal direction of the wing plate.

In connection with said rotation axis **20**, in order for the wing plate to catch a maximum amount of wind, said wing plate **30A** can pivot at the end of the frame **40A** by means of the hinge **26** but its unfolding angle is limited and this limitation of unfolding angle is accomplished by means of said stoppers **44 and 44'** one end of which is pivotally secured on the frame by means of pivot pin **38** and the other end of which passes through horizontal oblong holes **34 and 34'** formed in the wing plate **30A**.

Further, according to the invention, coil springs are inserted in the end of said stoppers and the coil springs facilitate the unfolding movement of the wing plate in regard to the frame.

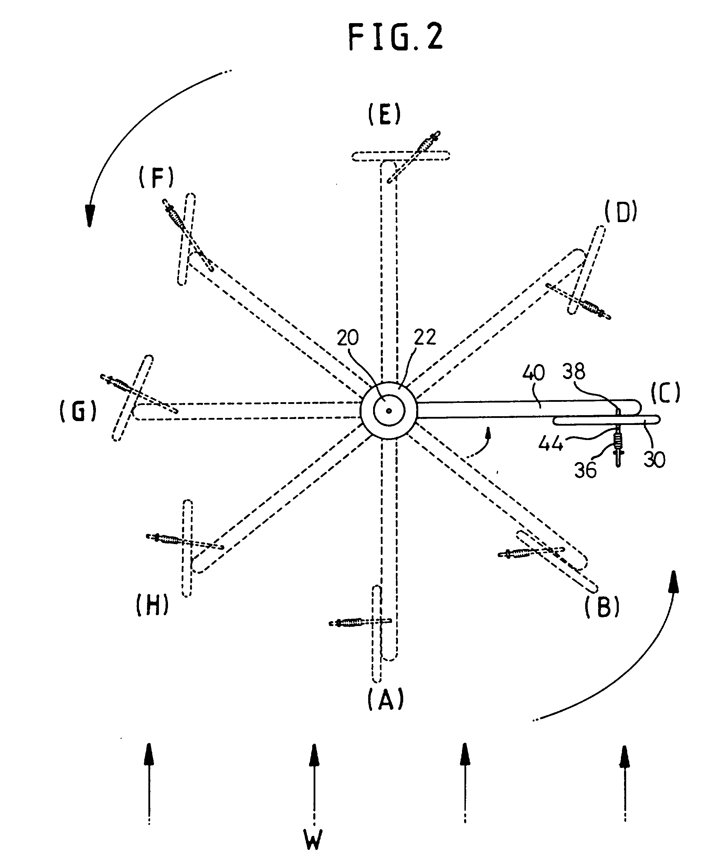

Operation of said wing plate apparatus will be set forth in detail with reference to **Fig 2**.

**Fig. 2** is a top plan view of one of wing plates which shows its change of unfolding degree during rotation wherein the direction of the wind **W** is supposed to blow from bottom to top as shown in the drawing.

Referring to **Fig. 2**, when the wing plate **30** is located at the nearest position **A** to the blowing wind, the eccentrically secured wing plate **30** becomes parallel to the frame **40**. During counterclockwise rotation of the wing plate **30** from the position **A** to the 90° -turned position **C**, said wing plate **30** which is eccentrically pivotally secured on the frame **40** maintains parallel position to the frame **40** because the amount of pressure of the wind acting on the left side of the wing plate is greater than that of right side of the wing plate when considered on the basis of said hinge **26**. However, when the wing plate passes by the position **C** the latter becomes unfolded little by little because the amount of pressure of the wind acting on the right side of the wing plate becomes gradually greater than that of the left side of the wing plate and, when the wing plate **30** gets near the position **D**, the wing plate **30** makes a same direction with the wind **W** due to the pressure of the wind acting with balance on both sides of the wing plate **30**. When the wing plate **30** goes past the position **D**, pressure of the wind becomes to act on the rear side of the wing plate **30** and the wing plate **30** operates in an opposite direction. That is, considering the hinge **26** as a pivoting basis, the amount of pressure of the wind acting on the left side of the wing plate forces the wing plate to pivot clockwise while the amount of pressure of the wind acting on the right side of the wing plate forces the latter to pivot counterclockwise. At this moment, since the area of right side of the wing plate is bigger than that of left side, the amount of pressure of the wind acting on the right side is greater than that of left side of the wing plate, the wing plate becomes unfolded more widely.

At the position **E**, being 180° -turned from the initial position **A**, the unfolding angle of the wing plate becomes rectangular in regard to the frame **40** and this unfolding angle becomes maximum at the position **F** due to the pressure of the wind.

When the wing plate reaches the maximum unfolding position **F**, even though the amount of pressure of the wind acting on the right side of the wing plate is quite considerable, since the system is set in such a way that the pressure of the wind cannot overcome the elasticity of the coil springs **36 and 36'** inserted in the stoppers **44 and 44'**, said maximum unfolding angle of the wing plate is limited. It should be noted that the maximum degree of unfolding angle and the position of the wing plate can be changed by adjusting elasticity of said coil springs **36 and 36'** inserted in the stoppers.

However, it is preferred that said maximum unfolding angle is limited to 120° by means of said coil springs **36** and **36**' with proper elasticity in order to make the wing plate catch the pressure of the wind efficiently.

The unfolding angle of the wing plate **30** which turns to the initial point **A** via the 270° -turned position **G**, gradually becomes 0° because the elasticity of the coil springs **36 and 36'** overcomes the pressure of the wind acting on the wing plate.

In the present invention it is preferred to make the wing plate circular shape because this shape can help spread the pressure of the wind evenly on the wing plate and, as a consequence, make the support stable.

Further the wing plate according to the invention can have an upright peripheral wall **30** on its circumference in order to catch even a breeze.

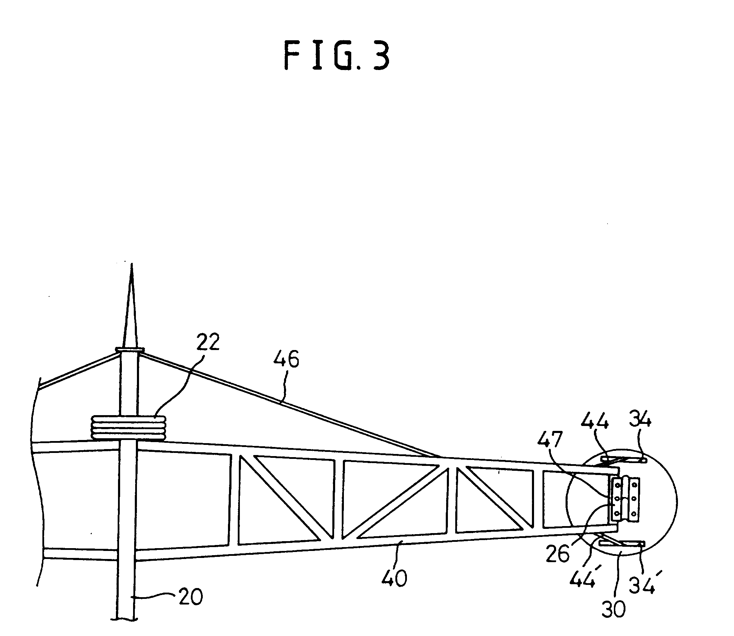

**Fig. 3** is a front view of one of the wing plates showing its pivotal structure in regard to the frame.

Referring to **Fig. 3**, the wing plate **30** is pivotally connected to the end of the frame 4**0** by an attaching bracket **47** and a hinge **26** with eccentric ratio of 3:1 or 4:1 of the horizontal width of the wing plate so as to catch the sufficient amount of wind. And said frame extends in horizontal direction from the frame connector **22** which is fixed on the rotation axis **20**, and the stoppers **44 and 44'** which are pivotally secured on the frame are so extended via the oblong holes **34 and 34'** as to enable the eccentrically attached wing plate to efficiently act on the wind.

At the same time, said frame **40** is supported by an upholder **46** such as a wire rope which is fixed to the top of the axis **20** so that it may endure a sudden strong wind.

As is seen from the above, since the wing plate according to the invention has its pivotally secured position inside with eccentricity, it can cure one of drawbacks shown in prior art being drooped due to its own weight and also can operate even in a breeze with the help of the upright peripheral wall formed on the circumference of the wing plate.

## Claims

1. A wing plate apparatus of windmill which comprises a support, a rotation axis that is secured in said support and vertically rotates, plural of frames that horizontally radiate from the upper portion of said axis and plural wing plates each of which is pivotally secured at the free end of said each frame,
said wing plate apparatus is characterized in that the wing plate has oblong holes horizontally punctured therein and the wing plate apparatus further comprises elongated rod type stoppers to limit the unfolding angle of the wing plate, wherein one end of the stoppers being pivotally secured on said frame and the other end passing through said oblong holes so as to make the wing plate unfolded up to 120°

2. The wing plate apparatus of windmill as recited in CLAIM 1 is characterized in that the ends of the stoppers which pass through said oblong holes have coil springs to limit the unfolding angle of said wing plates.

3. The wing plate apparatus of windmill as recited in CLAIM 1 or 2 is characterized in that each of said wing plates has circular shape.

4. The wing plate apparatus of windmill as recited in CLAIM 3 is characterized in that each of said wing plates has an upright peripheral wall on its circumference.
